# EUROPEAN PATENT APPLICATION

(11) **EP 1 380 233 A1**
(43) Date of publication of application: **14.01.2004**
(21) Application number: 02714528.3
(22) Date of filing: 08.04.2002
(51) Int. Cl.: A47C 7/00, A47C 7/02, A47C 27/14

(54) **SHEET FOR VEHICLE AND METHOD FOR MANUFACTURE THEREOF**

(30) Priority: 16.04.2001 JP 2001117462
(71) Applicant: TS Tech Co., Ltd, Asaka-shi, Saitama 351-0012 (JP); Honda Giken Kogyo Kabushiki Kaisha, Minato-ku, Tokyo 107-0062 (JP)
(72) Inventor: NAKAMURA, Mitsumasa, Meguro-ku, , Tokyo 152-0031 (JP)
(74) Representative: Schuster, Thomas, Dipl.-Phys.
(86) International application number: PCT/JP2002/003482
(87) International publication number: WO 2002/085163

(57) **Abstract**

The vehicle seat S has at least the sitting area 11 and the seat cushion 10 for supporting the sitting area 11. The seat cushion 10 is formed by using foam as an exterior material in a given form. The backrest 20 for supporting the back area 21 may be molded in the seat cushion at the same time. In addition, the foam may be one selected from the group consisting of PP(polypropylene) bead foam, PE(polyethylene) bead foam, PP foam, PE foam, AS resin(acrylonitrile-styrene resin) foam, EVA(ethylene-vinyl acetate copolymer resin) foam and a urethane foam.

## Description

### BACKGROUND OF THE INVENTION

### Field of the Invention:

The present invention relates to a vehicle seat and a method of manufacturing the same, and particularly, it relates to a lightweight seat, which can easily form an innovative and exquisite design and can be readily recycled, and a method of manufacturing the same.

### Description of the Related Art:

A vehicle seat in general has a seat cushion and a backrest. Both of the seat cushion and the backrest consist of frames having given forms, a cushioning material made of urethane foam which covers the frame and supports either a hip or a back of a passenger, and a skin material which covers these frames and the urethane foam cushioning material.

The aforementioned vehicle seat is made by coating the frames with the urethane foam cushioning material and, thereafter, covering with the skin material. In addition, the seat cushion and the backrest need to be joined with each other since they are separately formed. Especially when the seat has a mechanism for reclining the backrest, the reclining mechanism is covered by a reclining cover.

As mentioned above, both the seat cushion and the backrest consist of many parts such as a frame, urethane foam cushioning material, and a skin material. Since these parts need to be assembled, many manufacturing processes are required for manufacturing the vehicle seat. In the process of applying the skin material, covering the urethane foam cushioning material with the skin material is a troublesome task since the skin material is difficult to slip over the cushioning material.

For example, when the urethane foam cushioning material is covered with the skin material by means of a machine, considerable force is required because the skin material does not slip over the cushioning material easily. As the result, the urethane foam cushioning material is deformed and the state of covering lacks in uniformity, and even worse, the shoulder portion gets flaggy. As the shoulder portion gets flaggy, surplus skin material may be caused at the bottom part, which may lead to occurrence of wrinkles or slacks.

Furthermore, it is difficult to create exquisite or distinctive design since the shape of the urethane foam cushioning material is obscured by the skin material as the result of covering the urethane foam cushioning material with the skin material. In order to solve the foregoing problems and to improve commercial value, it is necessary to form the urethane foam cushioning material in a special shape or to fit a part of the skin material in the urethane foam so as to be able to adjust the shape of the seat, as described in Japanese unexamined utility model publication No. 1-124200.

In addition, the vehicle seat is not readily separated for recycling since the vehicle seat consists of many parts from various materials such as the frame, the urethane foam cushioning material and the skin material, which is a disadvantage in view of recycling efficiency.

Since the seat cushion and the backrest are separately formed, the levels of the seat cushion and the backrest on the side faces are uneven when they are joined with each other. That is a restriction in making design of the vehicle seat. In the meantime, a cover for the reclining mechanism is required when the seat has a reclining mechanism, with which the backrest reclines against the seat cushion.

Therefore, it is an object of the present invention to provide a vehicle seat, which can easily form an innovative and exquisite design and can be readily recycled by using a foam as an exterior material, and a method of manufacturing the same.

It is another object of the present invention to provide a vehicle seat, which can be manufactured without a skin material, can directly form a concave/convex shape, and can decrease its weight by performing an integral molding with using the foam as an exterior material in a mold, and a method of manufacturing the same.

It is a further object of the present invention to provide a vehicle seat, which uses foam as an exterior material, so as to be able to make the side faces of the seat cushion and the backrest at an identical level, and at the same time eliminates the need for a cover which covers the reclining mechanism and expand the flexibility of its design, and a method of manufacturing the same.

### SUMMARY OF THE INVENTION

According to the present invention, a vehicle seat has at least a sitting area and a seat cushion for supporting the sitting area in which the seat cushion is formed from foam as an exterior material in a given form.

Since the foam is used as the skin material and the shape of the exterior material is not obscured by a skin material, the exterior material becomes an outward appearance so as to be able to create exquisite and innovative design. Because the skin material is not used, it is also possible to manufacture at a lower cost as well as to provide a lightweight seat.

In the vehicle seat of the present invention having at least a sitting area and a seat cushion for supporting the sitting area, the seat cushion is formed from the foam as an exterior material in a given form and has a pad in the sitting area. Preferably, the seat cushion has a concave portion to which the pad is disposed.

When a pad is disposed in above-mentioned manner, desired shape, material, and color of the pad may be obtained so as to expand the flexibility of design and provide an innovative vehicle seat.

The foam forming the seat cushion may be one selected from the group consisting of PP(polypropylene) bead foam, PE(polyethylene) bead foam, PP foam, PE foam, AS resin(acrylonitrile-styrene resin) foam, EVA(ethylene-vinyl acetate copolymer resin) foam and urethane foam. PP bead foam with superior weather resistance is preferably used, PE bead foam is cheap, EVA foam and urethane foam is very flexible, thus it is possible to expand the flexibility of design according to different materials which have been selected.

According to the present invention, a vehicle seat has at least a seat cushion for supporting a sitting area and a backrest for supporting a back area in which the seat cushion and the backrest are formed from foam as an exterior material in a given form. In this manner, the side faces of the seat cushion and the backrest are formed on an identical face so as to be able to form the seat cushion and the backrest as a unit.

In addition, a vehicle seat of the present invention having at least a seat cushion for supporting a sitting area and a backrest for supporting a back area, in which the seat cushion and the backrest are formed from foam as an exterior material in a given form and have pads in the sitting area and the back area. Preferably, the sitting area of the seat cushion and the back area of the backrest have concave portions to which the pad is disposed. When a pad is disposed in above-mentioned manner, desired shape, material, and color of the pad may be obtained so as to expand the flexibility of design and provide an innovative vehicle seat.

The foam forming the seat cushion and the back rest may be one selected from the group consisting of PP(polypropylene) bead foam, PE(polyethylene) bead foam, PP foam, PE foam, AS resin(acrylonitrile-styrene resin) foam, EVA(ethylene-vinyl acetate copolymer resin) foam and urethane foam.

In addition, the seat cushion and the backrest are preferably made by inserting a frame and performing an integral foaming. Here, the surface of the foam is treated, preferably with grain patterns. A reclining device, which reclines the backrest, is preferably covered with foam as an exterior material. A boundary of the side faces of the seat cushion and said backrest is preferably a flat surface as an identical face.

In above-mentioned means of formation, the reclining mechanism (reclining device) can be disposed inside the foam as an exterior material when the backrest reclines against the seat cushion so as to be able to eliminate the use of a reclining cover, to eliminate the necessity of having a large number of employees for the assembly work of the seat cushion and the backrest and to design a seat in which the seat cushion and the backrest is formed integrally.

According to the present invention, the foam resin is integrally molded on frames, the exterior material of the seat cushion including the sitting area and the backrest for supporting the back is formed by using the foam, and then other pads are disposed in the sitting area and the back area.

In addition, according to the present invention, the foam resin is integrally molded on frames, the seat cushion including the sitting area and the backrest for supporting the back are formed by using the foam, and then other pads are disposed in the sitting area and the back area.

Here, concave portions are formed in the sitting area and the back area, and pads which fits the concave portion are disposed thereto. The integral mold of foam resin on the frame is performed by filling the foam resin into the mold, in which the frame is inserted beforehand. A cavity side of the mold is preferably a side to create grain patterns on exposed part of the seat cushion and the backrest.

The integral mold in the mold can be performed so as to be able to provide a vehicle seat in which concave/convex shapes of the foam are expressed directly, and also provide a lightweight seat, by following above-mentioned manner.

In above-mentioned manner and according to the vehicle seat of the present invention, one or all of the seat cushion, the backrest and the headrest are formed from the foam as an exterior material, and the shape of the foam expresses a shape formed by a mold without any change. As these components can be integrally molded in a mold and use no skin material, a concave/convex shape of the foam becomes their outward appearances without any change.

In addition, since the foam is used as an exterior material, no skin material is required. Therefore, it is readily separated for recycling, and thus it has high recycling efficiency.

Since the foam without being changed is used, it is possible to manufacture at a lower cost and to provide a lightweight seat. At the same time, it is possible to provide a vehicle seat with better shape and design by adding, for example, a pigment so as to apply color. When the seat has a reclining function for reclining the backrest, the boundary of the backrest and the seat cushion on the side faces is flat at an identical level so as to expand the flexibility of its design.

In addition, using bead foam as the foam may improve shock absorption. The whole frame is coated with the bead foam and, thus, absorbs shocks from every direction, which improves safety.

### BRIEF DESCRIPTION OF THE DRAWINGS

Fig.1 is a perspective view of the vehicle seat;

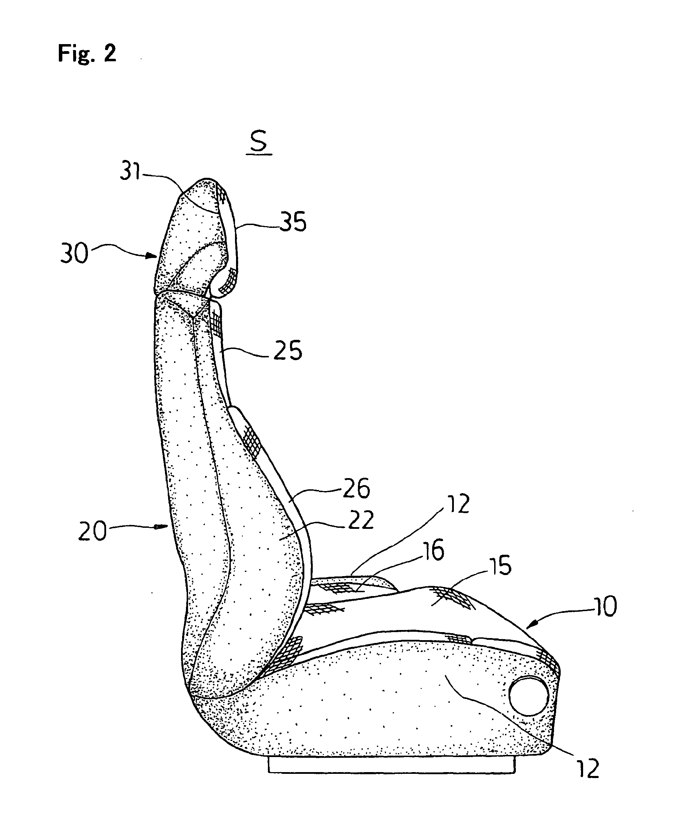

Fig.2 is a side view of the vehicle seat;

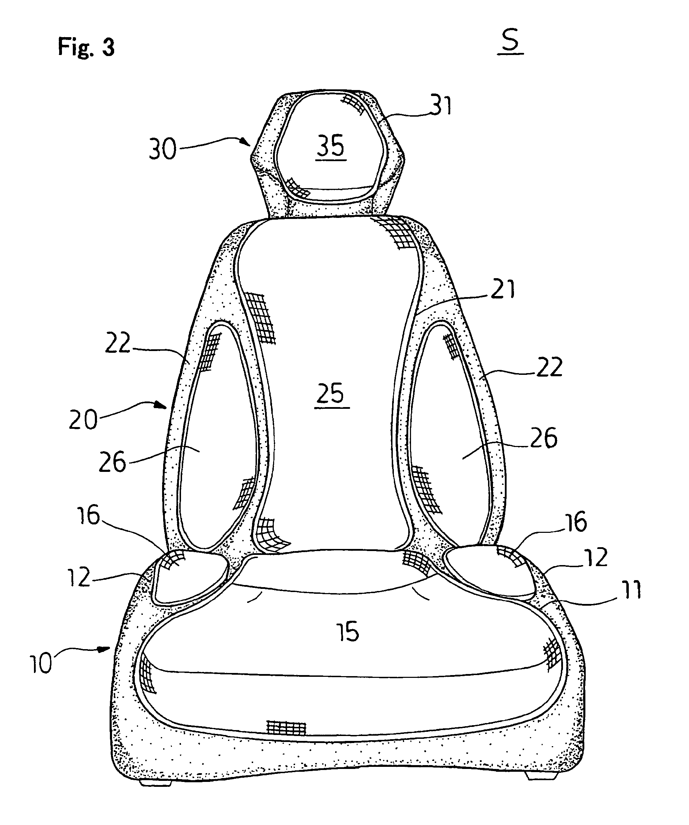

Fig.3 is a front view of the vehicle seat;

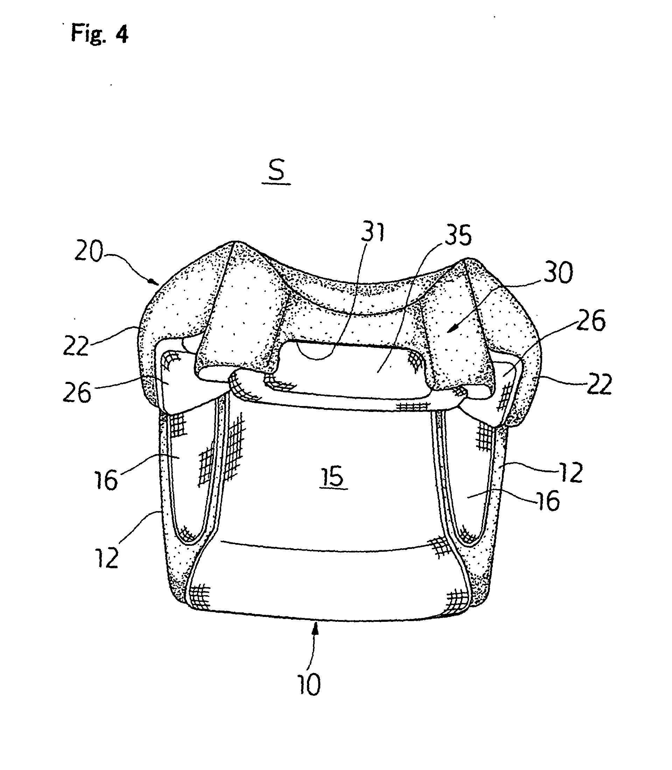

Fig.4 is a plan view of the vehicle seat;

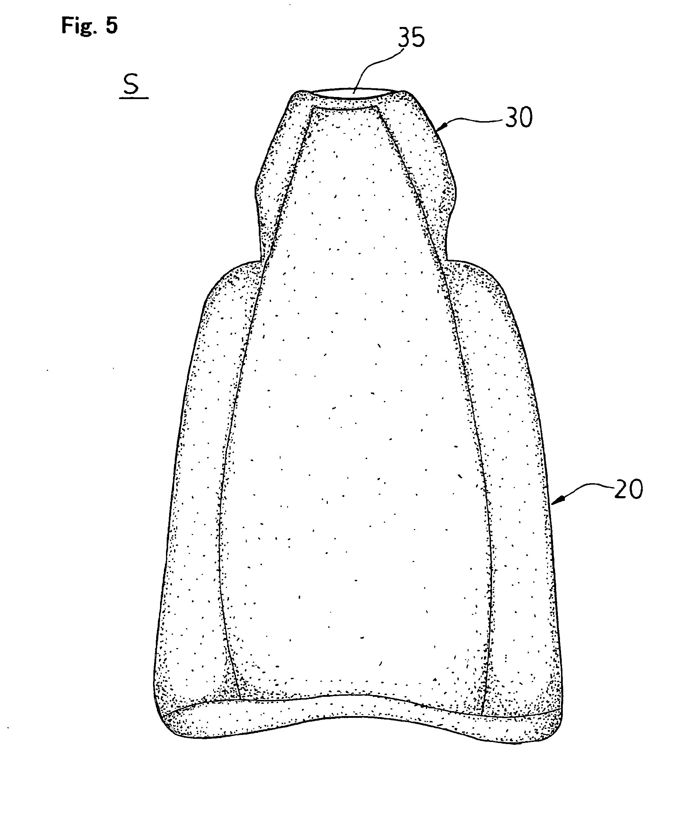

Fig.5 is a back view of the vehicle seat;

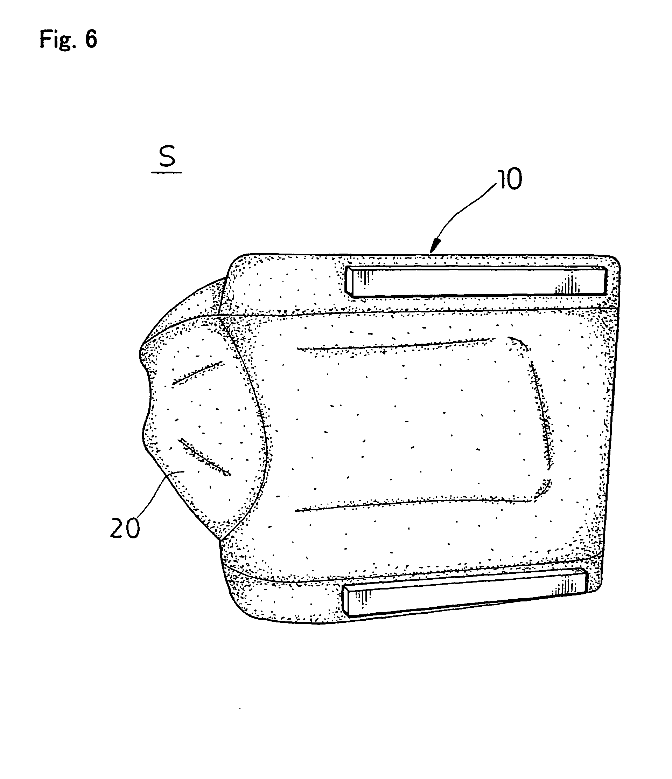

Fig.6 is a bottom plan view of the vehicle seat;
Fig.7 is a perspective view of pads;

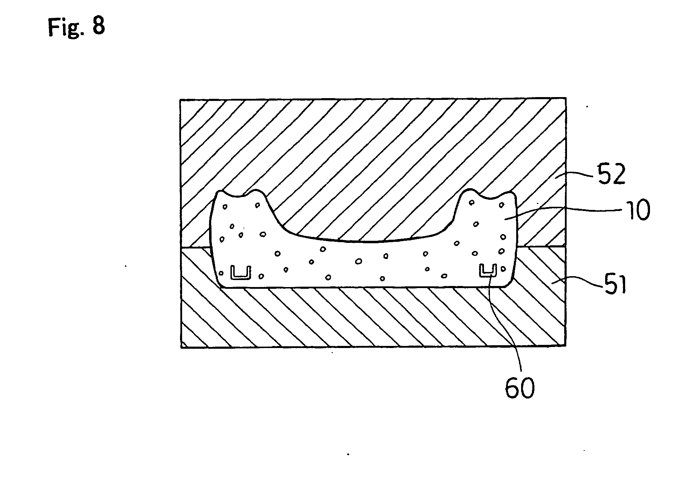

Fig.8 is a descriptive cross sectional view showing the state of molding; and

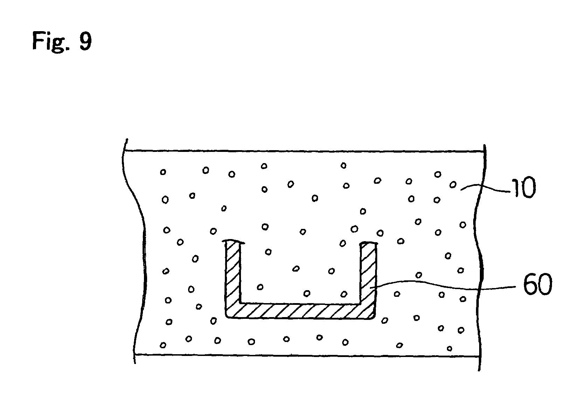

Fig.9 is an enlarged view of relevant parts.

### DESCRIPTION OF THE PREFERRED EMBODIMENTS

Referring now to the attached figures, the present invention will be further described in detail.

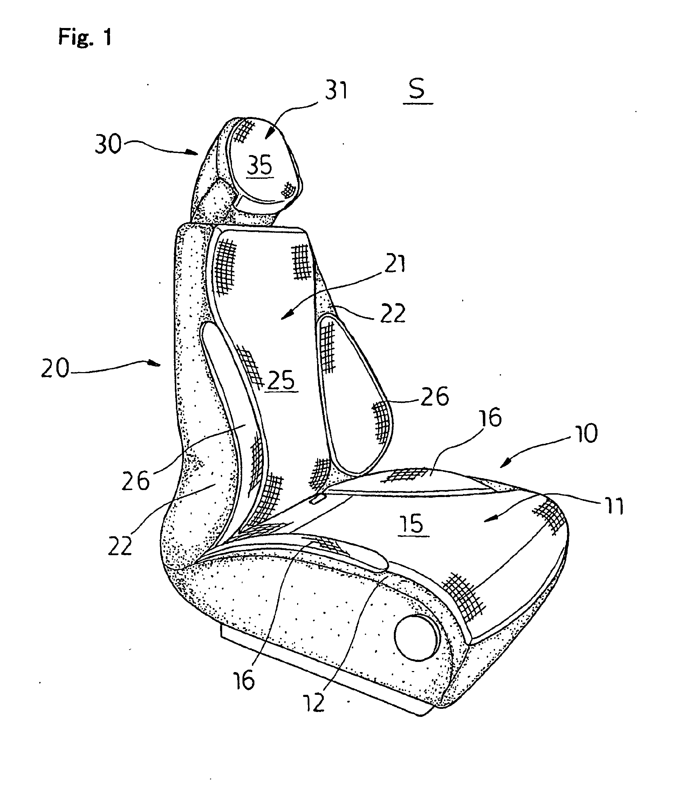

A vehicle seat S of the present invention may consist of only a seat cushion 10, but as described in Fig. 1, it has both a seat cushion 10 and a backrest 20 in the present embodiment. The seat cushion 10 according to the present invention has a sitting area 11 and a bank portion 12 on each side for holding. The backrest 20 of the present embodiment has a back area 21 and a side pad 22 on its both sides to ensure the holding of passenger body. In addition, there is a headrest 30 on top of the backrest 20.

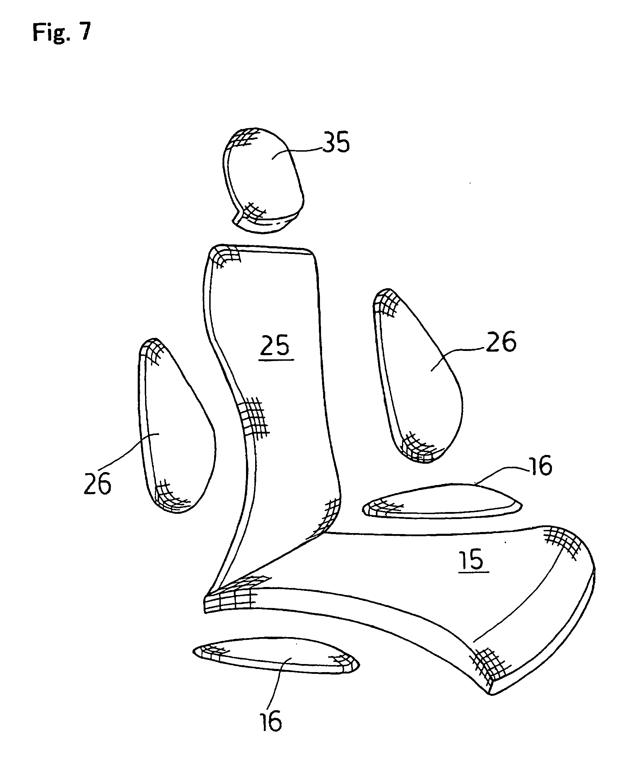

According to the present embodiment, the seat cushion 10, the backrest 20, and the headrest 30 are formed by molded foam as an exterior material. Moreover, each of a sitting area 11 of the seat cushion 10 and the bank portion 12, a back area 21 of the backrest 20 and a side pad 22, a head support potion 31 of the headrest 30 where the head of a passenger touches has a given shape of concave (not shown), and pads 15, 16, 25, 26, 35 (shown in Fig. 7) are respectively disposed thereto. Each of the pads 15, 16, 25, 26, and 35 is portioned in the drawings, however, they can be formed integrally or portioned for the seat cushion, the backrest, and the headrest. The point is to use pads with a preferred design. When pads are disposed in above-mentioned manner, desired shape, material, and color of the pad may be applied so as to expand the flexibility of design and provide an innovative vehicle seat.

The pads 15, 16, 25, 26, and 35 are respectively joined to the sitting area 11 of the seat cushion 10 and the bank portion 12, the back area 21 of the backrest 20 and the side pad 22, and the head support portion 31 of the headrest 30 by applying joining means. An adhesive, a sheet fastener and the like may be used as means of joining.

The seat cushion 10, the backrest 20, and the headrest 30 of the present embodiment are formed integrally with foam as exterior material, and the foam forming these seat cushion 10, backrest 20, and the headrest 3 is one selected from the group consisting of PP(polypropylene) bead foam, PE(polyethylene) bead foam, PP foam, PE foam, AS resin(acrylonitrile-styrene resin) foam, EVA(ethylene-vinyl acetate copolymer resin) foam and urethane foam.

Further, each of the seat cushion 10, the backrest 20, and the headrest 30 has a seat frame, a pipe frame, and a support frame disposed thereto, and they are formed by performing an integral molding of the foam as described later. In addition, the seat frame, the pipe frame, and the support frame may consist of conventionally known materials.

Although the details are omitted in the present embodiment, it is possible to form a reclining mechanism (reclining device), with which the backrest 20 inclines against the seat cushion 10, in the foam as an exterior material of the seat cushion 10 and the backrest 20 integrally. By doing so, a reclining device cover can be omitted whereby the side faces of the seat cushion 10 and the backrest 20 can be made flat. Equally, a device for inclining the headrest for the headrest 30 may be disposed inside the exterior material.

Moreover, the surface of the seat cushion 10, the backrest 20, and the headrest 30 is treated, for example, in grain pattern. The grain pattern can be suitably selected, and adding a pigment to the foam can generate different color so as to be able to provide a vehicle seat with exquisite and innovative design.

The pads 15, 16, 25, 26, and 35 have given forms to fit each of the disposition, and these pads may be selected by distinctive character, for example, comfort or sweat-absorbent when seated or leant against the backrest. For example, conventional urethane cushioning material covered with a skin material, a cushion like skin material being stuffed, or a pad formed by integral skin foam may be used as pads.

Referring now to the integral molding of the seat cushion 10, the method of manufacturing the vehicle seat S according to the present invention will be further described below. The integral molding of a support frame 60 and the foam(seat cushion 10) is performed by using molds 51 and 52. The molds 51 and 52 have "the grain pattern"(not shown) on the inner side to print grain patterns on the exposed side of a product. First, the support frame 60 for forming the seat cushion 10 is disposed in the mold 51.

Next, the mold 51 and 52 are clamped, and foam resin, which becomes foam forming a skin material of the seat cushion 10, is inserted. As described above, the foam resin may be one selected from the group consisting of PP(polypropylene) bead foam, PE(polyethylene) bead foam, PP foam, PE foam, AS resin(acrylonitrile-styrene resin) foam, EVA(ethylene-vinyl acetate copolymer resin) foam and a urethane foam. The support frame 60 and the foam form the seat cushion 10 as a unit. Here, concave portions are formed in the foam, in each of the sitting area 11 and the bank portion 12.

Next, other pads 15 and 16 are respectively joined to the above-mentioned concave portions. Joining may be performed by using an adhesive or a sheet fastener of which one side is attached to the pad and the other side is attached to the foam so as to join them by a sheet fastener.

Although the seat cushion 10 was taken as an example of above-mentioned manufacturing embodiment, it is certainly possible for the seat cushion 10, the backrest 20 and the headrest 30 to be integrally molded in a mold. Since the portion except for the later attached pad will be exposed as a product, shape formed in the mold may become an outward appearance. Therefore, conventional coverage with the skin material which may deform the foam is no longer needed, so as to provide the vehicle seat S with a preferred design.

### Industrial Applicability

As has been described in the above, it is possible to provide a vehicle seat with an innovative and exquisite design which can be readily recycled by using foam as an exterior material and a method of manufacturing the same according to the present invention. Furthermore, it is possible to provide a lightweight seat, which can be formed integrally in a mold so that a skin material is not needed and that a concave/convex shape is expressed directly and a method of manufacturing the same. Moreover, it is possible to form the side faces of a seat cushion and a backrest as an identical face and at the same time eliminate the need for a coverage of the reclining mechanism so as to be able expand the flexibility of its design.

## Claims

1. A vehicle seat comprising at least a sitting area and a seat cushion for supporting the sitting area, **characterized in that** the seat cushion is formed from foam as an exterior material in a given form.

2. A vehicle seat as claimed in Claim 1 **characterized in that** said sitting area comprises a pad disposed thereto.

3. A vehicle seat as claimed in claim 1 **characterized in that** said sitting area comprises a concave portion to which the pad is disposed.

4. A vehicle seat as claimed in Claim 1 **characterized in that** said foam forming the seat cushion is one selected from the group consisting of PP(polypropylene) bead foam, PE(polyethylene) bead foam, PP foam, PE foam, AS resin(acrylonitrile-styrene resin) foam, EVA(ethylene-vinyl acetate copolymer resin) foam and urethane foam.

5. A vehicle seat comprising at least a sitting area, a seat cushion for supporting the sitting area, a back area, and a backrest for supporting the back area, **characterized in that** the seat cushion and the backrest is formed from foam as an exterior material in a given form.

6. A vehicle seat as claimed in Claim 5 **characterized in that** said sitting area and said back area comprise pads disposed thereto.

7. A vehicle seat as claimed in Claim 5 **characterized in that** said sitting area of the seat cushion and said back area of the backrest comprise concave portion to which the pads are disposed.

8. A vehicle seat as claimed in Claim 5 **characterized in that** said foam forming the seat cushion and the backrest is one selected from the group consisting of PP(polypropylene) bead foam, PE(polyethylene) bead foam, PP foam, PE foam, AS resin(acrylonitrile-styrene resin) foam, EVA(ethylene-vinyl acetate copolymer resin) foam or a urethane foam.

9. A vehicle seat as claimed in Claim 1 or 5 **characterized in that** said seat cushion and said backrest are formed by integrally foaming with inserting a frame thereinto.

10. A vehicle seat as claimed in Claim 4 or 8 **characterized in that** a surface of the foam is treated.

11. A vehicle seat as claimed in Claim 10 **characterized in that** said surface treatment is a grain-pattern treatment.

12. A vehicle seat as claimed in Claim 5 **characterized in that** a reclining device for reclining the backrest is covered with said foam as an exterior material.

13. A vehicle seat as claimed in Claim 5 **characterized in that** a boundary of the side faces of said seat cushion and said backrest is a flat surface as an identical face.

14. A method of manufacturing a vehicle seat **characterized in that** foam resin is integrally molded on a frame to form an exterior material of a seat cushion including a sitting area, and then, another pad is disposed to said sitting area.

15. A method of manufacturing a vehicle seat as claimed in Claim 14 **characterized in that** another pad is disposed to said sitting area and said back area.

16. A method of manufacturing a vehicle seat as claimed in Claim 14 **characterized in that** concave portions are formed in the sitting area and back area, and pads which fit the concave portion are disposed thereto.

17. A method of manufacturing a vehicle seat as claimed in Claim 14 **characterized in that** the integral mold of foam resin on said frame is performed by filling the foam resin into the mold, in which the frame is inserted beforehand, and a cavity side of the mold is a side to create grain pattern on exposed part of the seat cushion and the backrest.
